# EUROPÄISCHE PATENTSCHRIFT

(11) **EP 3 279 629 B1**
(45) Veröffentlichungstag und Bekanntmachung des Hinweises auf die Patenterteilung: **29.04.2020**
(21) Anmeldenummer: 17182813.0
(22) Anmeldetag: 24.07.2017
(51) Int. Cl.: B29C 44/44, B29C 44/58, B29C 44/60, G01L 19/00, G01L 7/16

(54) **MESSEINRICHTUNG**
MEASUREMENT DEVICE
DISPOSITIF DE MESURE

(30) Priorität: 04.08.2016 DE 102016114421
(43) Veröffentlichungstag der Anmeldung: 07.02.2018
(73) Patentinhaber: Michel, Thorsten, 56355 Lautert (DE)
(72) Erfinder: Michel, Thorsten, 56355 Lautert (DE)
(74) Vertreter: Klein, Thomas

(56) Entgegenhaltungen:
- DD-A1- 214 207
- DE-A1- 3 030 304
- DE-A1- 4 225 879
- DE-A1-102005 035 931
- US-A1- 2013 000 384

## Beschreibung

Die Erfindung bezieht sich auf eine Meßeinrichtung zur Erfassung des Drucks in einer Kavität einer Form eines Partikel-Schäumwerkzeugs während eines Schäumprozesses von Partikelschäumen, mit einem in einer Wand der Form angeordneten Meßkopf, in dem eine vom Innendruck in der Kavität beaufschlagbare Druckaufnahmeeinrichtung angeordnet ist, durch die der aufgenommene Druck einem Drucksensor zuführbar und von dem Drucksensor in ein entsprechendes elektrisches Drucksignal wandelbar ist, wobei der Meßkopf eine flexible Membran aufweist, die auf ihrer der Kavität zugewandten sich quer zu ihrer Ebene erstreckenden Seite von dem Druck in der Kavität beaufschlagbar und auslenkbar ist.

Bei einer derartigen Meßeinrichtung ist es bekannt in einer Ausnehmung in der Wand der Form einen beweglichen und vom Druck in der Kavität beaufschlagbaren Druckteller anzuordnen, der an seiner der Kavität abgewandten Seite einen Stößel aufweist. Das freie Ende des in einer Manschettendichtung axial geführten Stößels wirkt auf eine Membran eines Mengenverstärkers, der wiederum mit einem ein Manometer verbunden ist. Dabei weisen der Druckteller und die Membran des Mengenverstärkers gleichgroße Querschnitte auf, um das Manometer mit der gleichen Druckkraft wie der Schäumdruckkraft in der Kavität beaufschlagen zu können.

Dieser Aufbau ist aufwendig und benötigt einen großen Bauraum. Darüber hinaus kommt es an den Führungen des Stößels zu Reibung, die zu einer Veränderung der vom Stößel auf die Membran des Mengenverstärkers einwirkenden Kraft gegenüber der zu messenden auf den Druckteller wirkenden Kraft führt. Damit ist der von dem Manometer erfaßte Druck wesentlich von dem zu messenden Schauminnendruck beim Schäumprozeß verschieden.

Aus der US 2013/000384 A1 ist eine Meßeinrichtung der eingangs genannten Art bekannt. Dabei bildet der Kolben einen axial verschiebbar gelagerten Druckübertragungsbolzen, der sich bis zu dem Drucksensor erstreckt und diesen beaufschlagt.

Aus der DD 214 207 A1 ist eine Vorrichtung zum Messen des Schäumdrucks bekannt, die eine ölgefüllte Drucksonde aufweist. Zur Kavität ist die Drucksonde durch eine Membran verschlossen- Von der Drucksonde führt ein Kanal über eine Ventilkombination zu einem ölgefüllten Druckzylinder, dessen eine Seite von einer weiteren Membran verschlossen ist, die über einen Stößel auf ein schwenkbares Joch wirkt. Das schwenkbare Joch wirkt wiederum auf einen Piezogeber. Der Durchgang der Ventilkombination ist im Normalbetrieb geschlossen und wird nur bei Bedarf für eine Messung geöffnet. Im Normalbetrieb ist der Druckzylinder mit der Atmosphäre verbunden.

Aus der DE 10 2005 035 931 A1 ist ein hydraulischer Druckaufnehmer zur Erfassung des Drucks in einem hydraulischen Pfad erfaßt. Dazu ist ein Grundkörper in einem Flansch des hydraulischen Pfads angeordnet. Eine Trennmembran deckt auf der Seite des hydraulischen Pfads eine im Flansch ausgebildete und auf der dem hydraulischen Pfad abgewandt Seite mündende Kapillarleitung ab, wobei auf der Seite der Kapillarleitung zwischen Trennmembran und Flansch eine mit einer Übertragungsflüssigkeit gefüllte Druckkammer gebildet ist. Über die Kapillarleitung ist die Druckkammer mit einer Druckmeßzelle verbunden.

Aufgabe der Erfindung ist es daher eine Meßeinrichtung der eingangs genannten Art zu schaffen, die einfach aufgebaut ist, wenig Bauraum benötigt und den Schauminnendruck in der Kavität mit wesentlich erhöhter Genauigkeit und ohne negativen Einfluß der hohen Temperaturen des Schäumprozesses auf den Drucksensor erfaßt.

Diese Aufgabe wird erfindungsgemäß dadurch gelöst, daß die flexible Membran in einen auf seiner der Kavität abgewandten Seite im Meßkopf ausgebildeten, mit einer Flüssigkeit gefüllten Flüssigkeitsraum auslenkbar ist, von dem ein Kanal zu einem von dem Partikel-Schäumwerkzeug beabstandeten Transmitterkopf führt, in dem der Drucksensor angeordnet und von der Flüssigkeit beaufschlagt ist, wobei in dem Meßkopf ein Formtemperatursensor angeordnet ist, der in einem einer Wand der Form nahen Randbereich des Meßkopfs angeordnet ist und von dem eine zweite Signalleitung zu dem Transmitterkopf führt und wobei der Formtemperatursensor mit einer Wand der Form in Berührungskontakt steht.

Durch diese Ausbildung kann der Drucksensor in wesentlicher Entfernung von der beim Schäumprozeß hohe Temperaturen aufweisenden Form angeordnet sein, so daß diese hohen Temperaturen keinen negativen Einfluß auf den Drucksensor ausüben können. Durch die hydraulische Übertragung des Drucks entstehen dabei allenfalls vernachlässigbare Verluste, so daß ein zumindest weitgehend verlustfreie Messung des Innendrucks in der Kavität vom Drucksensor erfaßt werden kann.

Der Drucksensor ist dabei vorzugsweise ein elektronischer Drucksensor wie z.B. ein piezoresistiver oder piezoelektrischer Drucksensor oder ein Kapazitiver Drucksensor, der eine Druckmessung mit hoher Genauigkeit erlaubt und vorzugsweise ein digitales Drucksignal erzeugt.

Die flexible Membran vermeidet mögliche Reibungsverluste.
Der Kanal kann als Kapillarrohr ausgebildet sein.

Durch den Formtemperatursensor dient der Meßkopf in Doppelfunktion zur Erfassung des Innendrucks in der Kavität als auch der Temperatur der Form sowie der Transmitterkopf zur Abgabe von Signalen entsprechend des erfaßten Innendrucks in der Kavität und der erfaßten Temperatur der Form.

Da der Formtemperatursensor frei mit einer Wand der Form in Berührungskontakt steht, ist eine besonders genaue Erfassung der Temperatur der Form möglich.

Ohne zusätzlichen Montageaufwand kann in dem Meßkopf auch ein Schaumtemperatursensor angeordnet sein, der frei mit der Kavität verbunden ist, von dem eine erste Signalleitung zu dem Transmitterkopf führt. Damit dient in Doppelfunktion der Meßkopf zur Erfassung des Innendrucks in der Kavität als auch der Schaumtemperatur sowie der Transmitterkopf zur Abgabe von Signalen entsprechend des erfaßten Innendrucks in der Kavität und der erfaßten Schaumtemperatur.

Eine besonders hohe Integration im Meßkopf wird erreicht, wenn im Meßkopf die bewegliche Membran, der Schaumtemperatursensor und der Formtemperatursensor angeordnet sind und/oder der Transmitter zur Abgabe von Signalen entsprechend des erfaßten Innendrucks in der Kavität, der erfaßten Schaumtemperatur und Temperatur der Form dient.

Dazu kann der Transmitterkopf einen oder mehrere Anschlußkontakte aufweisen, an denen die Signale des Drucksensors und/oder die Signale des Schaumtemperatursensors und/oder die Signale des Formtemperatursensor abgreifbar sind.

Der von dem Flüssigkeitsraum zum Transmitterkopf führende Kanal und/oder die erste Signalleitung und/oder die zweite Signalleitung können in einem zwischen dem Meßkopf und dem Transmitterkopf angeordneten Abstandselement angeordnet sein, wodurch die Montage vereinfacht und der erforderliche Bauraum reduziert wird.

Besonders einfach in der Montage und Bauraum sparend ist es dabei, wenn Meßkopf, Abstandselement und Transmitterkopf fest miteinander verbunden sind.

Der Meßkopf und ggf. die einteilig fest miteinander verbundenen Elemente Meßkopf, Abstandselement und Transmitterkopf können mit dem Meßkopf fest in eine Ausnehmung in der Wand der Form eingesetzt sein.

Dadurch sind keine weiteren Halterungselemente für die Meßeinrichtung erforderlich.

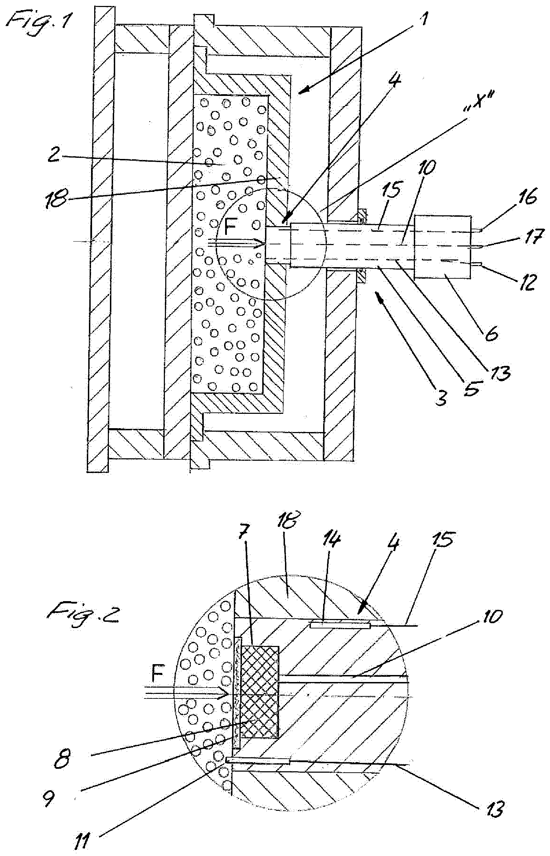

Ein Ausführungsbeispiel der Erfindung ist in der Zeichnung dargestellt und wird im Folgenden näher beschrieben. Es zeigen
- Figur 1: ein Partikel-Schäumwerkzeug im Längsschnitt
- Figur 2: einen vergrößerten Ausschnitt "X" aus Figur 1.

Das in den Figuren dargestellte Partikel-Schäumwerkzeug weist eine Form 1 mit einer Kavität 2 auf, in die Partikel aus Kunststoff eingefüllt sind. Bei dem Schäumprozeß expandieren unter Einblasen von Heißdampf hoher Temperatur (z.B. 140°C) die Kunststoffpartikel, füllen die Kavität 2 der Form 1 aus und verschweißen miteinander. Dabei entsteht ein Druck in der Kavität 2.

Um den Schäumprozeß steuern zu können ist es wichtig die Bedingungen während dieses Prozesses permanent zu erfassen. Diese Bedingungen sind der Druck in der Kavität, die Temperatur des Schaums in der Kavität 2 sowie die Temperatur der Form 1.

Dazu ist eine Meßeinrichtung 3 vorhanden, die aus einem Meßkopf 4, einem stabartigen Abstandselement 5 und einem Transmitterkopf 6 besteht, die fest miteinander verbunden sind.

Die Form 2 weist eine von außen nach innen durchgehende Ausnehmung 7 vorzugsweise runden Querschnitts auf, in die der entsprechenden Querschnitt aufweisende Meßkopf 4 fest eingesetzt ist.

Der Meßkopf 4 weist einen mit einer Flüssigkeit wie z.B. einem Öl gefüllten Flüssigkeitsraum 8 auf, dessen zur Kavität 2 gerichtete Mündung von einer flexiblen Membran 9 verschlossen ist.

Von dem Flüssigkeitsraum 8 führt ein ebenfalls mit der Flüssigkeit gefüllten Kanal 10 durch das Abstandselement 5 zu dem Transmitterkopf 6 und einem in dem Transmitterkopf 6 angeordneten, nicht dargestellten Drucksensor, so daß dieser von der Flüssigkeit beaufschlagt ist.

In dem Meßkopf 4 ist weiterhin ein Schaumtemperatursensor 11 angeordnet, der in die Kavität 2 ragt und durch den die jeweilige Temperatur des Schaums während des Schäumprozesses erfaßt und ein entsprechendes Signal erzeugt, das über eine durch den Meßkopf 4 und das Abstandselement 5 führende erste Signalleitung 13 zu einem ersten Anschlußkontakt 12 im Transmitterkopf 6 geleitet wird.

Weiterhin ist im Meßkopf 4 ein Formtemperatursensor 14 angeordnet, der in Berührungskontakt mit einer Wand 18 der Form 1 steht und die jeweilige Temperatur der Form erfaßt und ein entsprechendes Signal erzeugt, das über eine durch den Meßkopf 4 und das Abstandselement 5 führende zweite Signalleitung 15 zu einem zweiten Anschlußkontakt 16 im Transmitterkopf 6 geleitet wird.

Der Transmitterkopf 6 weist darüber hinaus noch einen dritten Anschlußkontakt 17 auf, dem das von dem Drucksensor erzeugte Signal zugeleitet wird.

Mit der eine einzige Baueinheit bildenden Meßeinrichtung können während des Schäumprozesses der Druck in der Kavität 2, die Temperatur des Schaums in der Kavität 2 sowie die Temperatur der Form 1 erfaßt werden und über die Anschlußkontakte 12, 16 und 17 einer nicht dargestellten Steuereinrichtung zur Steuerung des Schäumprozesses zugeführt werden.

### Bezugszeichenliste

- 1: Form
- 2: Kavität
- 3: Meßeinrichtung
- 4: Meßkopf
- 5: Abstandselement
- 6: Transmitterkopf
- 7: Ausnehmung
- 8: Flüssigkeitsraum
- 9: Membran
- 10: Kanal
- 11: Schaumtemperatursensor
- 12: erster Anschlußkontakt
- 13: erste Signalleitung
- 14: Formtemperatursensor
- 15: zweite Signalleitung
- 16: zweiter Anschlußkontakt
- 17: dritter Anschlußkontakt
- 18: Wand

## Patentansprüche

1. Meßeinrichtung (3) zur Erfassung des Drucks in einer Kavität (2) einer Form (1) eines Partikel-Schäumwerkzeugs während eines Schäumprozesses von Partikelschäumen, mit einem in einer Wand (18) der Form (1) angeordneten Meßkopf (4), in dem eine vom Innendruck in der Kavität (2) beaufschlagbare Druckaufnahmeeinrichtung angeordnet ist, durch die der aufgenommene Druck einem Drucksensor zuführbar und von dem Drucksensor in ein entsprechendes elektrisches Drucksignal wandelbar ist, wobei der Meßkopf (4) eine flexible Membran (9) aufweist, die auf ihrer der Kavität (2) zugewandten sich quer zu ihrer Ebene erstreckenden Seite von dem Druck in der Kavität (2) beaufschlagbar und auslenkbar ist,
die flexible Membran (9) in einen auf ihrer der Kavität (2) abgewandten Seite im Meßkopf (4) ausgebildeten, mit einer Flüssigkeit gefüllten Flüssigkeitsraum (8) auslenkbar ist, von dem ein Kanal (10) zu einem von dem Partikel-Schäumwerkzeug beabstandeten Transmitterkopf (6) führt, in dem der Drucksensor angeordnet und von der Flüssigkeit beaufschlagt ist, **dadurch gekennzeichnet dass**, in dem Meßkopf (4) ein Formtemperatursensor (14) angeordnet ist, der in einem einer Wand (18) der Form (1) nahen Randbereich des Meßkopfs angeordnet ist und von dem eine zweite Signalleitung (15) zu dem Transmitterkopf (6) führt und wobei der Formtemperatursensor (14) mit einer Wand (18) der Form (1) in Berührungskontakt steht.

2. Meßeinrichtung nach einem der vorhergehenden Ansprüche, **dadurch gekennzeichnet, daß** der Kanal (10) als Kapillarrohr ausgebildet ist.

3. Meßeinrichtung nach Anspruch 1, **dadurch gekennzeichnet, daß** in dem Meßkopf (4) ein Schaumtemperatursensor (11) ist, der frei in die Kavität (2) ragt, von dem eine erste Signalleitung (13) zu dem Transmitterkopf (6) führt.

4. Meßeinrichtung nach einem der vorhergehenden Ansprüche, **dadurch gekennzeichnet, daß** der Transmitterkopf (6) einen oder mehrere Anschlußkontakte (12, 16, 17) aufweist, an denen die Signale des Drucksensors und/oder die Signale des Schaumtemperatursensors (11) und/oder die Signale des Formtemperatursensors (14) abgreifbar sind.

5. Meßeinrichtung nach einem der vorhergehenden Ansprüche, **dadurch gekennzeichnet, daß** der von dem Flüssigkeitsraum (8) zum Transmitterkopf (6) führende Kanal (10) und/oder die erste Signalleitung (13) und/oder die zweite Signalleitung (15) in einem zwischen dem Meßkopf (4) und dem Transmitterkopf (6) angeordneten Abstandselement (5) angeordnet sind.

6. Meßeinrichtung nach Anspruch 5, **dadurch gekennzeichnet, daß** Meßkopf (4), Abstandselement (5) und Transmitterkopf (6) fest miteinander verbunden sind.

7. Meßeinrichtung nach einem der vorhergehenden Ansprüche, **dadurch gekennzeichnet, daß** der Meßkopf (4) fest in eine Ausnehmung (7) in der Wand (18) der Form (1) eingesetzt ist.

## Claims

1. Measuring device (3) for capturing the pressure in a cavity (2) of a mould (1) of a particle foaming tool during a foaming process of particle foams, having a measuring head (4) which is arranged in a wall (18) of the mould (1) and in which a pressure recording device is arranged, to which pressure recording device the internal pressure in the cavity (2) can be applied and by means of which the recorded pressure can be supplied to a pressure sensor and can be converted by the pressure sensor into a corresponding electrical pressure signal, wherein the measuring head (4) has a flexible diaphragm (9), to which the pressure in the cavity (2) can be applied and which can be deflected on its side which faces the cavity (2) and extends transversely to the plane thereof, and the flexible diaphragm (9) can be deflected in a fluid space (8) which is formed on its side facing away from the cavity (2) in the measuring head (4), is filled with a fluid, and from which a channel (10) leads to a transmitter head (6) which is at a distance from the particle foaming tool and in which the pressure sensor is arranged, to which the fluid is applied, **characterized in that** a mould temperature sensor (14) is arranged in the measuring head (4), which mould temperature sensor is arranged in an edge region of the measuring head close to a wall (18) of the mould (1) and from which a second signal line (15) leads to the transmitter head (6), and wherein the mould temperature sensor (14) is in touching contact with a wall (18) of the mould (1).

2. Measuring device according to Claim 1, **characterized in that** the channel (10) is in the form of a capillary tube.

3. Measuring device according to Claim 1, **characterized in that** a foam temperature sensor (11) is in the measuring head (4), which foam temperature sensor projects freely into the cavity (2) and from which a first signal line (13) leads to the transmitter head (6).

4. Measuring device according to one of the preceding claims, **characterized in that** the transmitter head (6) has one or more connection contacts (12, 16, 17) at which the signals from the pressure sensor and/or the signals from the foam temperature sensor (11) and/or the signals from the mould temperature sensor (14) can be tapped off.

5. Measuring device according to one of the preceding claims, **characterized in that** the channel (10) leading from the fluid space (8) to the transmitter head (6) and/or the first signal line (13) and/or the second signal line (15) is/are arranged in a spacer (5) arranged between the measuring head (4) and the transmitter head (6).

6. Measuring device according to Claim 5, **characterized in that** the measuring head (4), the spacer (5) and the transmitter head (6) are permanently connected to one another.

7. Measuring device according to one of the preceding claims, **characterized in that** the measuring head (4) is permanently inserted into a recess (7) in the wall (18) of the mould (1).

## Revendications

1. Dispositif de mesure (3) destiné à détecter la pression dans une cavité (2) d'un moule (1) d'un outil de moussage de particules au cours d'un processus de moussage de mousses de particules, ledit dispositif comprenant une tête de mesure (4) qui est disposée dans une paroi (18) du moule (1) et dans laquelle est disposé un dispositif de réception de pression qui peut être soumis à la pression interne de la cavité (2) et par le biais duquel la pression reçue peut être amenée à un capteur de pression et convertie en un signal de pression électrique correspondant par le capteur de pression, la tête de mesure (4) comportant une membrane flexible (9) qui peut être soumise, sur son côté tourné vers la cavité (2) et s'étendant transversalement à son plan, à la pression régnant dans la cavité (2) et pouvant être déviée, la membrane flexible (9) pouvant être déviée jusque dans un espace de liquide (8) qui est ménagé dans la tête de mesure (4) sur son côté opposé à la cavité (2), qui est rempli d'un liquide et depuis lequel un canal (10) s'étend en direction d'une tête de transmetteur (6) qui est distante de l'outil de moussage de particules et dans laquelle le capteur de pression est disposé et soumis au liquide, **caractérisé en ce qu'**un capteur de température de moule (14) est disposé dans la tête de mesure (4) et placé dans une zone de bord de la tête de mesure près d'une paroi (18) du moule (1), une deuxième ligne de signal (15) s'étendant dudit capteur de température de moule en direction de la tête de transmetteur (6) et le capteur de température de moule (14) étant en contact avec une paroi (18) du moule (1).

2. Dispositif de mesure selon la revendication 1, **caractérisé en ce que** le canal (10) est réalisé sous la forme d'un tube capillaire.

3. Dispositif de mesure selon la revendication 1, **caractérisé en ce qu'**un capteur de température de mousse (11) est disposé dans la tête de mesure (4) et fait saillie librement dans la cavité (2), une première ligne de signal (13) s'étendant dudit capteur de température de mousse en direction de la tête de transmetteur (6).

4. Dispositif de mesure selon l'une des revendications précédentes, **caractérisé en ce que** la tête de transmetteur (6) comporte un ou plusieurs contacts de raccordement (12, 16, 17) sur chacun desquels les signaux du capteur de pression et/ou les signaux du capteur de température de mousse (11) et/ou les signaux du capteur de température de moule (14) peuvent être pris.

5. Dispositif de mesure selon l'une des revendications précédentes, **caractérisé en ce que** le canal (10) s'étendant de l'espace de liquide (8) à la tête de transmetteur (6) et/ou la première ligne de signal (13) et/ou la deuxième ligne de signal (15) sont disposés dans un élément d'espacement (5) placé entre la tête de mesure (4) et la tête de transmetteur (6).

6. Dispositif de mesure selon la revendication 5, **caractérisé en ce que** la tête de mesure (4), l'élément d'espacement (5) et la tête de transmetteur (6) sont reliés les uns aux autres de manière fixe.

7. Dispositif de mesure selon l'une des revendications précédentes, **caractérisé en ce que** la tête de mesure (4) est insérée de manière fixe dans un évidement (7) de la paroi (18) du moule (1).
